# DEMANDE DE BREVET EUROPEEN

(11) **EP 2 511 694 A1**
(43) Date de publication de la demande: **17.10.2012**
(21) Numéro de dépôt: 11162538.0
(22) Date de dépôt: 15.04.2011
(51) Int. Cl.: G01N 21/84, G01N 21/90

(54) **Dispositif et methode pour la detection et/ou la determination de la position d'une couche barriere comprise dans la paroi d'un emballage en forme de tube**

(71) Demandeur: Aisapack Holding SA, 1896 Vouvry (CH)
(72) Inventeur: MEDICO, Léonard, 1895, Vionnaz (CH)
(74) Mandataire: Grosfillier, Philippe

(57) **Abrégé**

Dispositif pour la détection et/ou la détermination de la position d'une couche barrière comprise dans la paroi d'un emballage en forme de tube ; dispositif comprenant une source et un récepteur infrarouges, ladite et source et ledit récepteur étant disposés de manière à émettre - respectivement recevoir - un rayonnement infrarouge qui traverse une partie de la paroi d'un tube comprenant une couche barrière à analyser.
L'invention concerne également une méthode de détection et/ou de détermination de la position d'une couche barrière comprise dans la paroi d'un emballage en forme de tube ; méthode comprenant l'émission d'un rayonnement infrarouge au travers d'une paroi de tube comprenant une couche barrière, la réception et l'analyse dudit rayonnement infrarouge.

## Description

### Domaine de l'invention

L'invention concerne la fabrication d'emballages en forme de tube qui comprennent une couche barrière, notamment dans la tête de tube. Plus spécifiquement, l'invention concerne la détection et/ou la détermination de la position d'une couche barrière disposée dans la paroi d'un tube.

### Etat de la technique

L'amélioration des propriétés barrières des emballages et en particulier des tubes flexibles a fait l'objet de nombreux développements tant au niveau des matières que des procédés ou des technologies. La principale difficulté que ces travaux ont permis de surmonter a été l'apport de propriétés barrière au niveau de la tête du tube qui forme la partie supérieure de l'emballage et qui est reliée à au corps tubulaire flexible. Les solutions décrites dans l'art antérieur peuvent être classées en plusieurs catégories :
- Les têtes de tube obtenues par assemblage d'un insert barrière
- Les têtes de tube obtenues pas surmoulage d'un insert barrière
- Les têtes de tube multicouches obtenues par moulage multi-matière
De nombreux brevets décrivent les procédés et technologies permettant de mettre en oeuvre les différentes solutions. La tête de tube peut être fixée au corps tubulaire par soudage ou directement par surmoulage.

Cependant, lors de la production de ces tubes barrières en grande quantité, plusieurs difficultés sont rencontrées.

Lorsque les têtes de tubes sont fabriqués par assemblage, les têtes sont pré-assemblées puis conditionnées en cartons pour être ensuite transportés jusqu'à la ligne de production des tubes. Les cartons sont vidés dans des trémies, puis les têtes de tube sont acheminées jusqu'à des bols vibrants grâce à des bandes transporteuses et elles sont enfin transférées jusqu'à la station de soudage par le biais de guides. Il arrive fréquemment qu'un insert se sépare de la tête de tube avant l'opération d'assemblage. Cela peut occasionner des arrêts de la ligne de production lorsque par exemple l'insert se bloque dans les guides. Ces arrêts fréquents font chuter la productivité et génèrent des rebus liés au démarrage de la ligne. Un second problème beaucoup plus critique est la fabrication et la mise sur le marché d'emballages défectueux. Ce problème survient lorsqu'une tête de tube sans insert est soudée sur le corps tubulaire.

Lorsque la tête de tube est fabriquée par surmoulage d'un insert, des difficultés similaires sont rencontrées.

Lorsque la tête de tube est fabriquée par moulage multicouche, il est impossible de contrôler la répartition correcte de la couche barrière dans la tête de tube sans détruire l'emballage. Il devient ainsi très difficile pour le producteur de garantir des propriétés barrières constantes de ses emballages. Seul des contrôles statistiques à postériori, longs et fastidieux, permettent de contrôler la qualité des échantillons produits. Comme le contrôle n'est pas fait en ligne, lorsqu'un échantillon défectueux est détecté ce sont des quantités importantes d'emballages qui sont rejetées. Cela entraîne des déchets importants ainsi qu'une perte de productivité.

Il existe donc un besoin important de pouvoir éviter la production d'emballages défectueux, d'améliorer la productivité des lignes de production, de diminuer la quantité des déchets et de garantir une plus grande qualité des emballages produits.

### Exposé de l'invention

Afin de résoudre les problèmes précités, l'invention consiste à utiliser un dispositif permettant de détecter et/ou de déterminer la répartition d'une couche barrière comprise dans la paroi d'un emballage en forme de tube. Le dispositif selon l'invention comprend une source et un récepteur infrarouge (longueur d'onde comprise entre 0.78 et 1000 microns) qui sont disposés de manière à émettre - respectivement recevoir - un rayonnement infrarouge qui traverse une partie de la paroi d'un tube comprenant une couche barrière à analyser.

L'invention concerne également une méthode de détection et/ou de détermination de la position d'une couche barrière comprise dans la paroi d'un emballage en forme de tube; la méthode comprenant l'émission d'un rayonnement infrarouge au travers d'une paroi de tube comprenant une couche barrière, la réception et l'analyse dudit rayonnement infrarouge.

On entend par couche barrière une couche de résine utilisée pour protéger le produit emballé d'un gaz ou substance située à l'extérieur de l'emballage ou pour éviter la migration dans la paroi de l'emballage ou à travers la paroi de l'emballage de substance contenues dans le produit emballé. Il est courant d'utiliser par exemple une barrière à l'oxygène pour éviter l'oxydation du produit emballé ou une barrière aux arômes pour éviter la perte d'arômes dans le produit emballé ou encore une barrière à la lumière pour éviter la dégradation du produit par la lumière.

Plus spécifiquement, l'invention consiste en un procédé de production de tube flexibles comportant au moins deux couches ; ledit procédé comportant au moins une source émettant une lumière de longueur d'onde comprise de préférence entre 2 et 16 microns, la dite lumière traversant la paroi de tube à analyser, p.ex. la tête, pendant au moins une étape du procédé de fabrication du tube.

Le procédé de fabrication permet d'éviter la production de tubes défectueux et il permet plus spécifiquement de garantir un niveau de propriétés barrières au niveau de la tête du tube. La lumière traversant la paroi à analyser est utilisée soit pour détecter la présence de la couche barrière, soit pour déterminer la répartition de la couche barrière dans la tête de tube.

Le procédé de fabrication de tubes contient un dispositif permettant de détecter la couche barrière qui est présente dans la tête de tube. Ce dispositif de détection se compose au moins d'une source de lumière, ladite lumière traversant au moins une fois la tête de tube et ayant au moins une longueur d'onde comprise entre 2 et 16 microns ; et au moins d'un récepteur de ladite lumière mesurant l'intensité lumineuse de la lumière transmise. Il est observé que la lumière émise par la source est absorbée fortement par la couche barrière de la tête de tube et assez peu par les autres couches. Une différence d'intensité lumineuse importante est par conséquent obtenue au niveau du récepteur entre une tête de tube avec et sans couche barrière. Cette absorption préférentielle est en particulier remarquée lorsque la couche barrière est composée d'éthylène vinyle alcool, de polyéthylène téréphtalate ou de polyamide. Pour une barrière à la lumière une couche de couleur noire est souvent utilisée et peut être détectée avec le dispositif.

Il est observé que l'intensité de la lumière reçue est faiblement dépendante de la résine de base composant la tête de tube et en particulier si cette résine est en polyéthylène ou en polypropylène. Il est observé également que la résine de base peut contenir des pigments sans que cela empêche la détection de la couche barrière. On remarque cependant qu'une couleur noire ou très foncée perturbe la détection de façon significative, l'absorption de ce type de pigment dans l'infrarouge étant proche ou supérieur à la résine de base. Les têtes de tube de couleur noire ou très foncée dans la résine de base sont donc à éviter, et en général à proscrire.

Le dispositif de détection fait partie intégrante du procédé de fabrication du tube et permet selon les cas l'éjection des têtes de tube ou des tubes défectueux ou l'acceptation des emballages selon des tolérances définies.

Selon une premier mode de l'invention, le dispositif de détection est situé en amont de l'assemblage de la tête et du corps cylindrique. Il se situe de préférence en aval de la trémie de chargement des épaules ou en aval du bol vibreur. Cette configuration est privilégiée lorsque les tubes sont fabriqués par soudage de la tête sur le corps tubulaire. Le système de détection est avantageusement couplé à un système d'éjection situé en aval de ce dernier permettant d'éliminer les têtes de tube défectueuses avant l'assemblage sur le corps cylindrique. Les arrêts machines sont évités, et la fabrication de tubes défectueux est éliminée.

Selon un second mode de l'invention, le dispositif de détection se situe après l'assemblage de la tête du tube sur le corps tubulaire. Cette configuration est préférée lorsque la tête de tube est surmoulée sur le corps cylindrique ou lorsqu'un risque de défectuosité lors de l'assemblage est identifié. Le système de détection est avantageusement couplé à un système d'éjection situé en aval et permettant d'éliminer les emballages ayant des têtes de tube défectueuses.

Il existe de nombreuses façons de réaliser le dispositif de détection de la couche barrière.

Selon une première version de réalisation du dispositif de détection, l'émetteur de lumière est situé d'un coté de la tête du tube et le récepteur de lumière en face de ce dernier, de l'autre coté de la tête du tube.

Une autre version consiste à disposer l'émetteur de lumière et le récepteur du même coté de la tête du tube et d'utiliser un miroir réfléchissant la lumière de l'autre coté de la tête du tube.

La source de lumière peut être réalisée à l'aide d'un élément chauffé (comme une ampoule), d'un laser, d'une diode électroluminescente, ou d'autres éléments émettant de la lumière infrarouge. Le dispositif d'émission est choisi pour émettre au moins une longueur d'onde absorbée préférentiellement par la couche barrière de la tête de tube, la dite lumière étant plus faiblement absorbée dans les autres couches de la tête de tube.

Le récepteur transforme l'intensité de la lumière reçue en un signal électrique pouvant être traité. Avantageusement, la sensibilité du détecteur est adaptée à la source émettrice de lumière. L'utilisation de dispositifs permettant de sélectionner certaines longueurs d'onde tels des filtres, permet d'améliorer la détection de la couche barrière. De même, l'utilisation de dispositifs permettant d'influer sur les caractéristiques de la lumière émise comme des polariseurs ou des éléments qui modifient la longueur d'onde, peut permettre également d'améliorer la détection.

Dans une version du système de détection, la lumière traversant la tête de tube provient d'une source ponctuelle tel une diode ou un laser focalisé et est reçue et analysée en un point. Cela permet de détecter la présence ou non de la couche barrière au point de mesure. Cette méthode est particulièrement adaptée à la détection de la couche barrière dans les épaules préfabriquées et comportant un insert.

Dans une version plus élaborée du système de détection, l'analyse est faite sur toute la surface de la tête de tube afin de déterminer si la couche barrière couvre correctement la surface et en particulier au niveau de la périphérie de la tête de tube. Un système automatique d'analyse d'image est avantageusement couplé à ce dispositif.

Le dispositif et la méthode selon l'invention permettent de garantir les propriétés barrière de 100% des emballages produits.

La présente invention permet de diminuer les arrêts de la ligne de production et de limiter de façon importante les déchets de production.

L'invention peut être avantageusement utilisée dans le cadre de la fabrication de tubes comportant les têtes de tube suivantes :
● Tête de tube en polyéthylène (PE) avec une couche barrière en polyéthylène téréphtalate (PET).
● Tête de tube en polyéthylène (PE) avec une couche barrière en éthylène vinyle alcool (EVOH).
● Tête de tube en polyéthylène avec une couche barrière en polyamide (PA).
● Tête de tube en polyéthylène avec une couche barrière en polyéthylène de couleur noire.

L'invention est utilisable également pour détecter la couche barrière dans toute autre partie du tube comme par exemple dans la partie tubulaire ou dans le bouchon. La partie tubulaire est formée soit par co-extrusion soit par soudage d'une feuille multicouche.

L'invention a été décrite pour améliorer la fabrication de tubes flexibles ; cependant il y a un grand intérêt à utiliser également l'invention pour la fabrication d'autres types d'emballages et en particulier des emballages présentant une pièce moulée multicouche dans laquelle la couche barrière est emprisonnée et invisible.

L'invention peut être utilisée pour détecter ou déterminer la position de la couche barrière dans des emballages de type « brique » comportant une première partie composée d'une structure multicouche à base de carton et une deuxième partie moulée formant le goulot. L'invention permet de détecter ou déterminer la position de la couche barrière dans le goulot de l'emballage et également dans le bouchon si ce dernier présente une structure multicouche.

L'invention peut être utilisée avantageusement pour la fabrication d'emballages souples fabriqués à partir de films multicouches et de pièces moulées. Citons par exemples les poches souples comportant un goulot multicouche. L'invention est avantageuse pour détecter la couche barrière dans le goulot, elle peut être utilisée également pour détecter la couche barrière dans le film multicouche. Une variante de fabrication des emballages souples consiste à souder un goulot et un fond sur le film flexible pour améliorer la stabilité de l'emballage. L'invention est utilisée avantageusement pour détecter la couche barrière dans le fond, dans le goulot et dans le bouchon.

Un dernier exemple d'utilisation de l'invention est la fabrication de pièces moulées multicouches tels des préformes ou des bouchons. L'invention est utilisée avantageusement pour améliorer la qualité des pièces produite et diminuer les déchets grâce à une détection en ligne de la couche barrière dans les objets moulés.

## Revendications

1. Dispositif pour la détection et/ou la détermination de la position d'une couche barrière comprise dans la paroi d'un emballage en forme de tube ; dispositif comprenant une source et un récepteur infrarouges, ladite et source et ledit récepteur étant disposés de manière à émettre - respectivement recevoir - un rayonnement infrarouge qui traverse une partie de la paroi d'un tube comprenant une couche barrière à analyser.

2. Dispositif selon la revendication 1 dans lequel ladite source et ledit récepteur sont adaptés pour émettre - respectivement recevoir - un rayonnement infrarouge compris entre 2 et 16 microns.

3. Dispositif selon la revendication 1 ou 2 dans lequel ladite source et ledit récepteur sont disposés de part et d'autre d'une paroi de tube à analyser.

4. Dispositif selon la revendication 1 ou 2 dans lequel ladite source et ledit récepteur sont disposés du même côté d'une paroi de tube à analyser, le dispositif comprenant en outre un miroir disposé de l'autre côté de ladite paroi de tube à analyser.

5. Dispositif selon l'une des revendications précédentes pour la détection et/ou la détermination de la position d'une couche barrière disposée dans une tête de tube.

6. Dispositif selon l'une des revendications précédentes pour la détection et/ou la détermination de la position d'une couche barrière composée d'éthylène vinyle alcool, de polyéthylène téréphtalate ou de polyamide.

7. Système pour la fabrication de tubes comprenant une unité d'assemblage de têtes de tube sur des corps tubulaires ; système comprenant un dispositif selon l'une des revendications précédentes qui est situé en amont de ladite unité d'assemblage.

8. Système pour la fabrication de tubes comprenant une unité d'assemblage de têtes de tube sur des corps tubulaires ; système comprenant un dispositif selon l'une des revendications 1 à5 qui est situé en aval de ladite unité d'assemblage.

9. Méthode de détection et/ou de détermination de la position d'une couche barrière comprise dans la paroi d'un emballage en forme de tube ; méthode comprenant l'émission d'un rayonnement infrarouge au travers d'une paroi de tube comprenant une couche barrière, la réception et l'analyse dudit rayonnement infrarouge.

10. Méthode selon la revendication 9 dans laquelle ledit rayonnement infrarouge est émis préalablement à l'assemblage des têtes aux corps tubulaires.

11. Méthode selon la revendication 9 ou 10 dans laquelle le rayonnement est émis à une longueur d'onde entre 2 et 16 microns.

12. Méthode selon la revendication 11 dans laquelle la longueur d'onde se situe entre 8 et 12 microns.
